# FASCICULE DE BREVET EUROPEEN

(11) **EP 0 495 694 B1**
(45) Date de publication et mention de la délivrance du brevet: **29.05.1996**
(21) Numéro de dépôt: 92400051.6
(22) Date de dépôt: 09.01.1992
(51) Int. Cl.: C21C 5/52, F27B 3/10, F27D 17/00

(54) **Canne et dispositif de prélèvement et d'analyse de fumées et installation comportant un tel dispositif**
Messrohr zur Probennahme und Analyse von Ofenabgasen und Anlage mit einem derartigen Messrohr
Tube and apparatus for sampling and analysing of waste gases and installation containing said apparatus

(30) Priorité: 15.01.1991 FR 9100340
(43) Date de publication de la demande: 22.07.1992
(73) Titulaire: L'AIR LIQUIDE, SOCIETE ANONYME POUR L'ETUDE ET L'EXPLOITATION DES PROCEDES GEORGES CLAUDE, F-75321 Paris Cédex 07 (FR)
(72) Inventeur: Vuillermoz, Jean-Claude, F-78000 Versailles (FR); Perrin, Nicolas, Résidence Dauphine, F-78430 Louveciennes (FR); Devaux, Michel, F-57050 Metz Devant Les Ponts (FR)
(74) Mandataire: Le Moenner, Gabriel

(56) Documents cités:
- EP-A- 0 183 284
- DE-A- 1 936 649
- FR-A- 2 328 777
- FR-A- 2 431 546
- GB-A- 1 370 658
- PATENT ABSTRACTS OF JAPAN vol. 11, no. 268 (C-444)(2715) 29 aout 1987 & JP-A-62 074 020 ( MITSUBISHI ) 4 April 1987 * abstract *
- The Chemical Engineering-Guide To Heat Transfer, Vol. I, Plant Principles, K.J. McNaughton et al, (1986), McGraw-Hill Publications Co., New-York,N.Y., pages 10,11.

## Description

La présente invention concerne les dispositifs de prélèvement et d'analyse de fumées et plus particulièrement une canne de prélèvement de fumées dans un conduit d'évacuation de fumées, typiquement en sortie de four de traitement de matériaux, notamment de métallurgie, la canne comportant un tube extracteur ayant une partie d'extrémité coudée se terminant par une ouverture destinée à déboucher dans le conduit et une partie de raccordement à un circuit extracteur.

Un dispositif et une canne de ce type sont connus du document GB-A-1.370.658.

La fiabilité d'un tel dispositif dépend pour une grande part de la tenue mécanique ainsi que de la résistance au bouchage par les poussières contenues dans les fumées de la canne de prélèvement. En effet, en particulier dans les fours métallurgiques, le prélèvement des fumées s'effectue dans un flux gazeux dont la température évolue , au cours d'un cycle, de l'ordre de quelques dizaines de minutes en métallurgie, entre la température ambiante et des niveaux très élevés, parfois supérieurs à 1600°C. De plus, les fumées prélevées sont extrêmement chargées en poussières métalliques, avec des taux pouvant atteindre 250 g par Nm³, ainsi qu'en eau (jusqu'à 20 % dans certaines applications). Pour ces raisons, aucun dispositif d'analyse de fumées en continu n'est aujourd'hui disponible sur le marché malgré leur intérêt immédiat pour l'étude et l'optimisation des effets sur l'environnement des émissions de fumées, permettant son optimisation, et la possibilité de régulation de paramètres de process en fonction de l'analyse, notamment l'injection d'oxygène de post-combustion dans des fours à arc de production d'aciers ou de ferro-alliages.

La présente invention a pour premier objet de proposer une structure de canne de prélèvement de conception simple et robuste, ayant une durée de vie élevée et une susceptibilité au bouchage limitée.

Pour ce faire, selon une caractéristique de l'invention, la canne comprend un manchon fermé enclosant la partie d'extrémité du tube extracteur et comportant une partie principale ayant un axe et munie d'une entrée et d'une sortie pour un circuit de fluide de refroidissement formé dans le manchon, le tube extracteur débouchant par l'ouverture hors du manchon et ayant sa partie de raccordement s'étendant hors de la partie principale du manchon.

La présente invention a pour autre objet un dispositif de prélèvement et d'analyse de fumées à fiabilité accrue incorporant une telle canne de prélèvement.

Selon une caractéristique de l'invention, un tel dispositif de prélèvement et d'analyse de fumées dans un conduit d'évacuation de fumées définissant un trajet de fumées comporte au moins une canne telle que définie ci-dessus, montée sur le conduit avec une ouverture débouchant dans le trajet de fumées, le dispositif comportant typiquement au moins un moyen d'aspiration relié au tube extracteur de la canne et à un système d'analyse.

La présente invention a pour autre objet une installation de production d'acier ou de ferro-alliages permettant une conduite optimisée du process de production.

Pour ce faire, selon une caractéristique de l'invention, une telle installation comprend un four à arc muni d'un conduit d'évacuation de fumées, et un dispositif de prélèvement et d'analyse de fumées, tel que défini ci-dessus, et typiquement des moyens d'injection de gaz oxygéné dans le four et des moyens réglables d'alimentation en gaz oxygéné couplés au dispositif d'analyse.

D'autres caractéristiques et avantages de la présente invention ressortiront de la description suivantes de modes de réalisation, donnée à titre illustratif mais nullement limitatif, faite en relation avec les dessins annexés, sur lesquels :
- la figure 1 est une représentation schématique d'une installation de production d'acier ou de ferro-alliages selon l'invention ;
- la figure 2 est une vue en coupe longitudinale d'un premier mode de réalisation d'une canne de prélèvement selon l'invention ;
- la figure 3 est une vue en coupe verticale d'un mode de réalisation de montage d'une canne selon la figure 2 dans un système d'extraction de fumées d'un four ;
- la figure 4 est une vue partielle d'une variante de réalisation de la canne de la figure 2 ;
- la figure 5 est une vue en coupe longitudinale d'un autre mode de réalisation d'une canne selon l'invention ;
- les figures 6 et 7 sont des vues partielles, en coupe, de variantes de réalisation de la canne de la figure 5 ; et
- la figure 8 est une représentation schématique d'un autre mode de réalisation d'une installation selon l'invention.

Dans la description qui va suivre et sur les dessins, les éléments identiques ou analogues portent les mêmes chiffres de référence.

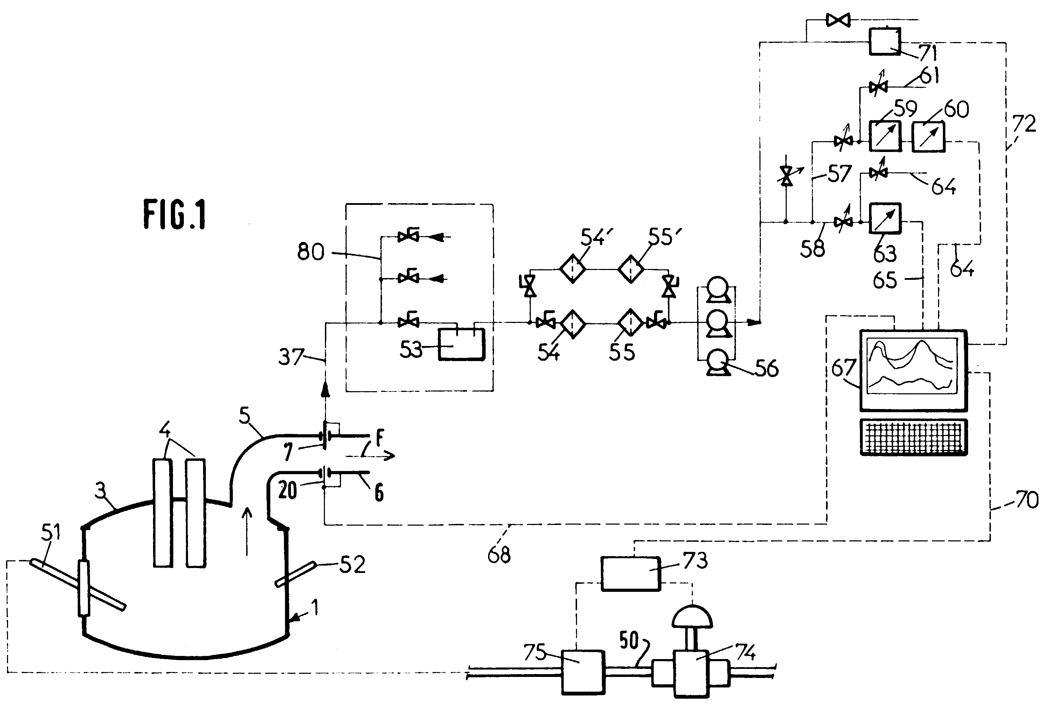

On reconnaît sur la figure 1 un four à arc 1 comportant une cuve surmontée d'une voûte 3 portant des électrodes 4 et un tronçon 5 de conduit d'évacuation de fumées se raccordant à un conduit de transfert de fumées 6 dans lequel les fumées circulent dans le sens indiqué par la flèche F. Le four comporte une lance d'injection d'oxygène 51 et un brûleur oxycombustible 52.

Selon un aspect de l'invention, dans le conduit 6 est disposée une canne de prélèvement de fumées 7 reliée, comme on le verra en détail plus avant, à un groupe de pompage 56 refoulant les fumées aspirées vers des analyseurs 59, 60, 63.

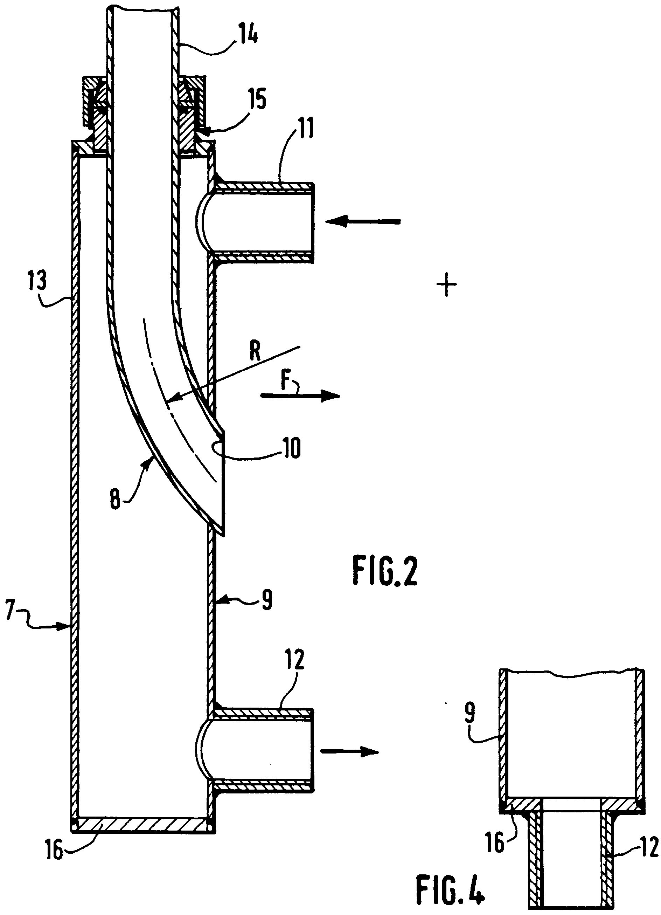

Comme représenté sur les figures 2 à 7, une canne de prélèvement de fumées selon l'invention comprend essentiellement un tube extracteur de fumées 8 s'étendant dans un manchon fermé 9 et débouchant hors de ce dernier par une ouverture 10 de captation de fumées. Le manchon 9 comporte une entrée 11 et une sortie 12 d'un fluide de refroidissement, typiquement de l'eau. Le manchon 9 comporte une partie principale tubulaire 13 ayant un axe et le tube extracteur 8 comporte une partie de raccordement 14 coaxiale à la partie principale 13 et s'étendant hors de la partie principale 13 du manchon 9 via un joint de dilatation étanche 15, par exemple du type raccord avec jonc ouvert, pour se raccorder au dispositif d'analyse.

Dans le mode de réalisation de la figure 2, le manchon 9 est rectiligne et fermé, à son extrémité opposée au raccord 15, par une paroi transversale 16, les entrée 11 et sortie 12 de fluide de refroidissement étant disposées latéralement au voisinage des extrémités opposées du manchon. Le tube extracteur 8 comporte une partie d'extrémité coudée dont l'extrémité libre débouche, affleurante, au travers d'un orifice formé dans la paroi latérale du manchon 9 en étant solidarisée à ce dernier par une soudure assurant la liaison entre les deux éléments et l'étanchéité du système de refroidissement. Pour limiter les risques de colmatage ou d'occlusion du tube extracteur, la partie d'extrémité coudée de ce dernier présente avantageusement un rayon de courbure R important, typiquement supérieur à trois fois le diamètre du tube 8 (par exemple un rayon de courbure d'environ 85 mm pour un tube 8 de diamètre 21,3 mm correspondant à un diamètre de manchon 9 d'environ 42 mm).

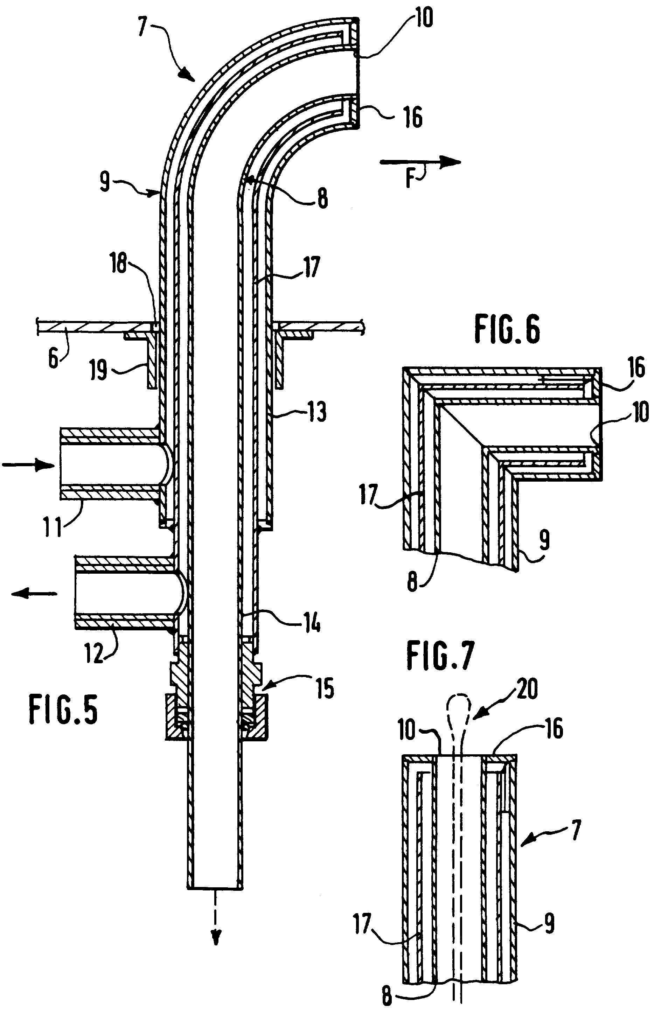

Pour limiter l'encombrement transversal de la canne 7 et faciliter notamment son insertion radiale dans le conduit d'évacuation de fumées 6, le raccord de sortie 12 du fluide de refroidissement peut être monté coaxialement sur la paroi d'extrémité 16, pourvue dans ce cas d'un orifice central, comme représenté sur la figure 4.

Dans le mode de réalisation des figures 5 à 7, le manchon 9 comporte une partie d'extrémité conformée comme la partie d'extrémité du tube extracteur 8 et comporte, à son extrémité libre, une paroi annulaire 16 établissant le raccordement, par soudage, avec l'extrémité libre du tube 8 et coplanaire à l'ouverture 10 d'entrée dans ce dernier. La canne 9 comporte en outre, ici, dans le manchon 9, une tubulure intermédiaire 17 concentrique au tube extracteur 8 et s'étendant, à une extrémité, jusqu'au voisinage de la plaque 16, et à l'autre extrémité, hors du manchon 13 et portant le joint d'étanchéité 15 avec la partie de raccordement 14 du tube extracteur 8. Comme on le voit sur la figure 5, la tubulure intermédiaire 17 définit ainsi, dans le manchon 9, un trajet aller-retour d'écoulement de fluide de refroidissement suivant deux chambres parallèles, l'entrée 11 de fluide de refroidissement débouchant dans l'espace entre le manchon extérieur 9 et le tube intermédiaire 17, la sortie 12 du fluide de refroidissement débouchant dans l'espace entre la tubulure intermédiaire 17 et la partie de raccordement 14 du tube extracteur 8. Dans ces modes de réalisation, la canne 9 présente une partie principale cylindrique droite et peut donc être engagée radialement dans la conduite d'extraction de fumées 6 par une ouverture 18 formée dans la paroi de cette dernière, la canne étant maintenue dans une position réglable par un fourreau 19 rapporté sur la conduite 6 au droit de l'ouverture 18 et muni de moyens déverrouillables (non représentés) de blocage en position de la canne 9.

Dans le mode de réalisation de la figure 6, l'extrémité coudée libre de la canne est constituée par un assemblage à angle droit, moins onéreux à réaliser. Dans le mode de réalisation de la figure 7, la canne 9 ne comporte pas d'extrémité coudée et est totalement droite, l'ouverture 10 d'accès au tube extracteur 8 étant orthogonale à l'axe de la canne, et donc parallèle, en position de montage, au flux de fumées F dans la conduite 6. L'agencement selon la figure 7 présente l'avantage de permettre le montage, dans la canne de prélèvement de fumées 7 d'un thermocouple 20 s'étendant centralement dans le tube extracteur 8 et faisant saillie hors de ce dernier dans le flux de fumées. Par contre, selon un aspect de l'invention, la conformation de canne selon les figures 2, 4, 5 et 6 permet, comme indiqué par les flèches F sur les figures 2, 3 et 5, d'orienter la canne à contre-courant du flux de fumées et d'aspirer ces dernières en limitant grandement l'introduction de poussières charriées par les fumées dans la canne et le dispositif d'analyse associé.

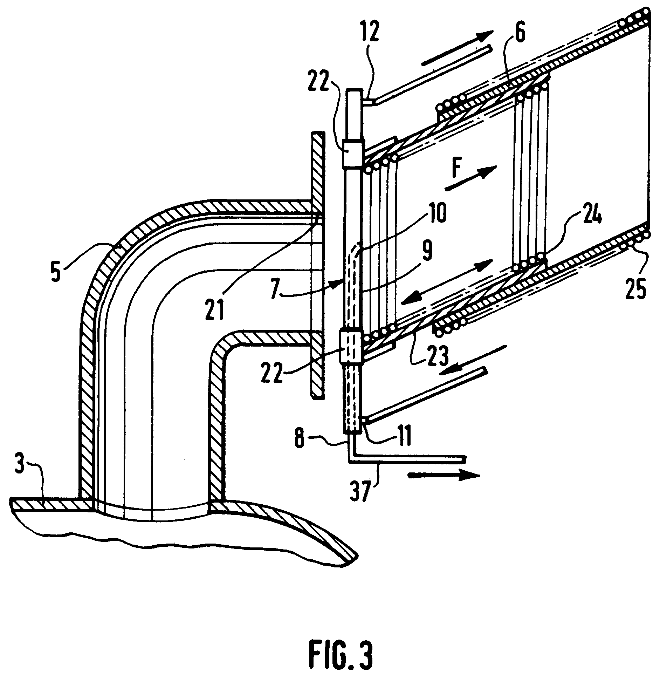

On a représenté sur la figure 3 un mode de montage particulièrement avantageux et efficace d'une canne selon le mode de réalisation de la figure 7 dans un circuit d'évacuation de fumées d'un four à arc dont la voûte 3 et le tronçon de conduit 5 sont déplaçables, typiquement par rotation autour d'un axe vertical, entre une position dégagée, permettant le chargement et le déchargement du métal, et une position opératoire où l'extrémité de sortie 21 du tronçon 5 se situe en regard et à faible distance de l'extrémité amont du conduit de transfert de fumées 6, un espace interstitiel étant ménagé entre les deux extrémités libres en regard. Selon l'invention, la canne 7 est montée, au moyen de deux fourrreaux 22, sur un tronçon de tube intermédiaire 23 monté à coulissement dans une extrémité du conduit 6. Le tronçon intermédiaire 23 portant la canne 7 est enfoncé dans le conduit 6 lors des opérations de manoeuvre de la voûte 3 du four et, en configuration opératoire, le tronçon 23 est sorti du tube 6 pour amener la canne 7 le plus près possible de l'extrémité de sortie 21 du tronçon de conduit 5 de façon que le prélèvement des fumées soit très peu perturbé par les entrées d'air parasites via l'espace interstitiel résiduel entre les tronçons 5 et 23, lesquelles sont avantageusement pourvues de serpentins de refroidissement 24 et 25.

Dans les différents modes de réalisation, les éléments constitutifs de la canne 7 sont réalisés typiquement en acier inoxydable.

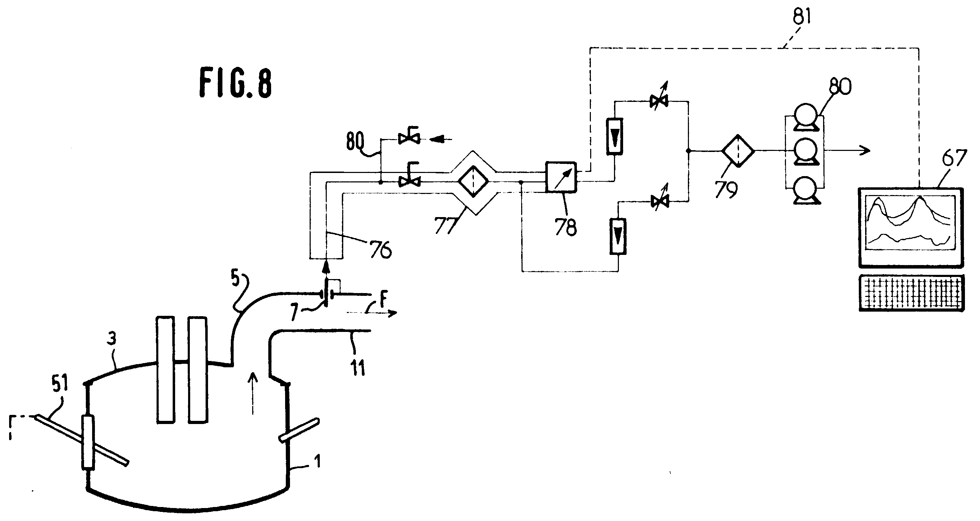

On décrira maintenant, en relation avec les figures 1 et 8, la partie d'analyse et de contrôle d'un dispositif et d'une installation selon l'invention.

Comme on le voit sur la figure 1, la canne de prélèvement 7 est reliée par une jonction amovible, permettant le nettoyage mécanique, de l'extérieur, du tube extracteur 8, à une tubulure 37 menant, dans le mode de réalisation représenté, à un condenseur d'eau 53 puis à un double jeu de filtres, 54, 54′, pour l'arrêt des poussières éventuellement contenues dans les fumées prélevées, et de dispositifs de dessication 55, 55′, en amont du groupe de pompage 56 dont le refoulement aboutit à au moins deux conduites distinctes 57 et 58 aboutissant respectivement à un analyseur de monoxyde de carbone 59 suivi d'un analyseur de gaz carbonique 60 et à un analyseur d'hydrogène 63. Les analyseurs 59 et 60 sont étalonnés par des gaz-étalon (azote, monoxyde de carbone et gaz carbonique) admis par une conduite 61 débouchant dans la conduite 57 en aval d'une vanne d'arrêt. De façon similaire, l'analyseur 63 est étalonné par un gaz hydrogéné admis par une conduite 64 débouchant dans la conduite 58 en aval d'une vanne d'arrêt. Les analyseurs 59, 60 et 63 sont reliés, par des lignes 64 et 65 à une unité centrale de traitement de données 67 recevant également, par une ligne 68, un signal représentatif de la température des fumées fourni par une sonde de température 69 située dans la conduite 6 au même niveau que la canne de prélèvement 7 (ou intégrée à cette dernière, comme déjà vu en relation avec la figure 7). L'unité centrale 67 peut également être reliée, via à une ligne 72, à un dispositif de mesure de débit par marquage à l'hélium 71, via une ligne 72, relié à la sortie du refoulement des pompes 56. L'unité centrale 67 contrôle, via une ligne 70, un dispositif régulateur 73 commandant une vanne proportionnelle 74 disposée dans une conduite 50 d'alimentation en oxygène de la lance 51 et comprenant en outre un débitmètre 75 relié au dispositif de régulation 73 auquel il fournit un signal de débit majoré qui est comparé à une valeur de consigne prédéterminée.

Selon un aspect de l'invention, dans la partie amont de la conduite 37 débouche, en amont d'une vanne d'arrêt, au moins un conduit 80 d'admission de gaz sous pression permettant le décolmatage par soufflage de la canne 7 et servant, le cas échéant, à sa protection en période non opérationnelle.

L'installation ci-dessus peut être complétée, comme représenté sur la figure 8, par une analyse de la teneur en eau des fumées issues du four 1. A cet effet, une canne de prélèvement 7, du type décrit précédemment, disposée dans la conduite 11, est raccordée, par une conduite 76 pourvue de moyens d'isolation et de chauffage pour éviter toute condensation, à un filtre à poussières 77, puis un analyseur d'eau 78, puis via un poste de dessication 79 à un groupe de pompage 80 servant à l'aspiration des fumées. La valeur de la teneur en eau mesurée en 78 est transférée par une ligne 81 vers l'unité de traitement de données 67 pour, le cas échéant, faire une correction compensatrice des analyses précédemment faites sur des fumées sèches.

Quoique la présente invention ait été décrite en relation avec des modes de réalisation particuliers, elle ne s'en trouve pas limitée pour autant mais est au contraire susceptible de modifications et de variantes qui apparaîtront à l'homme de l'art.

## Revendications

1. Canne de prélèvement de fumées dans un conduit (6) d'évacuation de fumées, comportant un tube extracteur (8) ayant une partie d'extrémité coudée se terminant par une ouverture (10) destinée à déboucher dans le conduit (6) et une partie (14) de raccordement à un circuit extracteur (37 ; 76), caractérisée en ce qu'elle comprend un manchon fermé (9) enclosant la partie d'extrémité du tube extracteur (10) et comportant une partie principale (13) ayant un axe et munie d'une entrée (11) et d'une sortie (12) pour un circuit de fluide de refroidissement formé dans le manchon, le tube extracteur débouchant par l'ouverture (10) hors du manchon (9) et ayant sa partie de raccordement (14) s'étendant hors de la partie principale (13) du manchon.

2. Canne selon la revendication 1, caractérisée en ce qu'elle comporte des moyens (19 ; 22) de montage du manchon (9) sur le conduit d'évacuation de fumées (6) et en ce qu'au moins la partie de raccordement (14) du tube extracteur (8) est coaxiale à l'axe de la partie principale (13) du manchon (9).

3. Canne selon la revendication 1 ou la- revendication 2, caractérisée en ce que le manchon (9) comporte une tubulure intérieure (17) entourant le tube extracteur (8) et formant, dans le manchon, une portion de trajet du circuit de fluide de refroidissement.

4. Canne selon l'une des revendications 1 à 3, caractérisée en ce que l'ouverture (10) est sensiblement orthogonale à l'axe de la partie principale du manchon (9).

5. Canne selon l'une des revendications 1 à 4, caractérisée en ce que la partie d'extrémité coudée a un rayon de courbure supérieur à trois fois le diamètre du tube extracteur (8).

6. Canne selon l'une des revendications 1 à 5, caractérisée en ce que le manchon (9) comporte une partie d'extrémité conformée comme la partie d'extrémité du tube extracteur (8).

7. Dispositif de prélèvement et d'analyse de fumées dans un conduit d'évacuation de fumées (11) définissant un trajet de fumées, comprenant au moins une canne (7) montée sur le conduit (11) avec une ouverture (10) débouchant dans le trajet de fumées, dans le conduit, caractérisée en ce que la canne est conforme à l'une quelconque des revendications précédentes.

8. Dispositif selon la revendication 7, caractérisé en ce que la canne (7) est orientée dans le conduit (11) de façon que l'ouverture (10) du tube extracteur (8) soit orientée de telle sorte que les fumées soient extraites à contre-courant du sens de circulation des fumées.

9. Dispositif selon la revendication 7 ou la revendication 8, caractérisé en ce qu'il comporte au moins un moyen d'aspiration (56 ; 80) relié à la partie de raccordement du tube extracteur (8) de la canne et à un système d'analyse (59 ; 60 ; 63 ; 67 ; 78).

10. Dispositif selon la revendication 9, caractérisé en ce que le système d'analyse comprend un analyseur d'eau (78).

11. Dispositif selon la revendication 10, caractérisé en ce que la canne (7) est reliée à l'analyseur d'eau (78) par un circuit (76) comportant des moyens d'isolation et de chauffage.

12. Dispositif selon l'une des revendications 7 à 11, caractérisé en ce qu'il comporte en outre des moyens (80) d'injection de gaz de débouchage dans le tube extracteur (8) de la canne (7).

13. Dispositif selon l'une des revendications 7 à 12, caractérisé en ce qu'il comporte au moins une sonde de température (20) dans le trajet des fumées, couplée au système d'analyse (59, 60, 63, 78, 67).

14. Installation de production d'acier ou de ferro-alliages comprenant un four à arc (1) muni d'un conduit d'évacuation de fumées (5, 11), caractérisée en ce qu'elle comporte un dispositif de prélèvement et d'analyse de fumées selon l'une des revendications 7 à 13.

15. Installation selon la revendication 14, comportant un dispositif selon l'une des revendications 9 à 11, caractérisée en ce qu'elle comporte des moyens (50, 51) d'injection de gaz oxygéné dans le four (1) et des moyens réglables (73, 74) d'alimentation en gaz oxygéné couplés au système d'analyse (67).

16. Installation selon la revendication 14 ou la revendication 15, caractérisée en ce que le four à arc (1) comporte une voûte mobile (3) munie d'un tronçon de conduit de fumées (5) positionné, en mode opératoire, en regard et à faible distance d'un conduit de transfert de fumées (11), la canne (7) étant disposée dans l'espace interstitiel entre les extrémités en regard du tronçon de conduit (5) et du conduit (11).

## Patentansprüche

1. Meßrohr zum Entnehmen von Rauchgasen aus einer Rauchgasabzugsleitung (6), mit einem Entnahmerohr (8), das einen abgewinkelten Endabschnitt, der in einer in die Leitung (6) mündenden Öffnung endet, und einen Verbindungsabschnitt (14) zu einem Entnahmekreis (37; 76) hat, dadurch gekennzeichnet, daß es eine geschlossene Umhüllung (9), welche den Endabschnitt des Entnahmerohrs (10) umschließt, und einen Hauptabschnitt (13) mit einer Achse aufweist, der mit einem Einlaß (11) und einem Auslaß (12) für einen in der Umhüllung ausgebildeten Kühlfluidkreis versehen ist, wobei das Entnahmerohr über die Öffnung (10) aus der Umhüllung (9) heraustritt und sein Verbindungsabschnitt (14) sich aus dem Hauptabschnitt (13) der Umhüllung heraus erstreckt.

2. Meßrohr nach Anspruch 1, dadurch gekennzeichnet, daß es Einrichtungen (19; 22) zum Befestigen der Umhüllung (9) an der Rauchgasabzugsleitung (6) aufweist und daß zumindest der Verbindungsabschnitt (14) des Entnahmerohrs (8) zu der Achse des Hauptabschnitts (13) der Umhüllung (9) koaxial ist.

3. Meßrohr nach Anspruch 1 oder 2, dadurch gekennzeichnet, daß die Umhüllung (9) ein inneres Rohrstück (17) aufweist, welches das Entnahmerohr (8) umgibt und in der Umhüllung einen Teil des Kühlfluidkreises bildet.

4. Meßrohr nach einem der Ansprüche 1 bis 3, dadurch gekennzeichnet, daß die Öffnung (10) im wesentlichen orthogonal zu der Achse des Hauptabschnitts der Umhüllung (9) ist.

5. Meßrohr nach einem der Ansprüche 1 bis 4, dadurch gekennzeichnet, daß der abgewinkelte Endabschnitt einen Krümmungsradius hat, der größer als das Dreifache des Durchmessers des Entnahmerohrs (8) ist.

6. Meßrohr nach einem der Ansprüche 1 bis 5, dadurch gekennzeichnet, daß die Umhüllung (9) einen Endabschnitt aufweist, der wie der Endabschnitt des Entnahmerohrs (8) ausgebildet ist.

7. Vorrichtung zum Entnehmen und zur Analyse von Rauchgasen aus einer Rauchgasabzugsleitung (11), die einen Rauchgasweg festlegt, mit zumindest einem an der Leitung (11) befestigten Meßrohr mit einer in den Rauchgasweg mündenden Öffnung (10) in der Leitung, dadurch gekennzeichnet, daß das Meßrohr einem der vorhergehenden Ansprüche entspricht.

8. Vorrichtung nach Anspruch 7, dadurch gekennzeichnet, daß das Meßrohr (7) in der Leitung (11) derart ausgerichtet ist, daß die Öffnung (10) des Entnahmerohrs (8) derart ausgerichtet ist, daß die Rauchgase im Gegenstrom zu der Strömungsrichtung der Rauchgase abgezogen werden.

9. Vorrichtung nach Anspruch 7 oder 8, dadurch gekennzeichnet, daß sie zumindest eine Saugeinrichtung (56; 80) aufweist, die mit dem Verbindungsabschnitt des Entnahmerohrs (8) des Meßrohrs und einem Analysensystem (59; 60; 63; 67; 78) verbunden ist.

10. Vorrichtung nach Anspruch 9, dadurch gekennzeichnet, daß das Analysensystem einen Wasseranalysator (78) aufweist.

11. Vorrichtung nach Anspruch 10, dadurch gekennzeichnet, daß das Meßrohr (7) mit dem Wasseranalysator (78) mittels eines Kreises (76) verbunden ist, der Isolier- und Heizeinrichtungen aufweist.

12. Vorrichtung nach einem der Ansprüche 7 bis 11, dadurch gekennzeichnet, daß sie darüber hinaus Einrichtungen (80) zum Einleiten von Mündungsgas in das Entnahmerohr (8) des Meßrohrs (7) aufweist.

13. Vorrichtung nach einem der Ansprüche 7 bis 12, dadurch gekennzeichnet, daß sie zumindest eine Temperatursonde (20) in dem Rauchgasweg aufweist, die an das Analysensystem (59; 60; 63: 78; 67) angeschlossen ist.

14. Anlage zur Erzeugung von Stahl oder Eisenlegierungen, mit einem Lichtbogenofen (1), der mit einer Rauchgasabzugsleitung (5, 11) versehen ist, dadurch gekennzeichnet, daß sie eine Vorrichtung zum Entnehmen und zur Analyse von Rauchgasen nach einem der Ansprüche 7 bis 13 aufweist.

15. Anlage nach Anspruch 14, mit einer Vorrichtung nach einem der Ansprüche 9 bis 11, dadurch gekennzeichnet, daß sie Einrichtungen (50, 51) zum Einleiten von sauerstoffreichem Gas in den Ofen (1) sowie einstellbare Einrichtungen (73, 74) zur Zufuhr von sauerstoffreichem Gas, die an das Analysensystem (67) angeschlossen sind, aufweist.

16. Anlage nach Anspruch 14 oder 15, dadurch gekennzeichnet, daß der Lichtbogenofen (1) ein bewegliches Gewölbe (3) aufweist, das mit einem Rauchgasleitungsstutzen (5) versehen ist, der im Betrieb gegenüber und in einer geringen Entfernung von einer Rauchgasüberführungsleitung (11) angeordnet ist, wobei sich das Meßrohr (7) in dem Zwischenraum zwischen den gegenüberliegenden Enden des Stutzens (5) und der Leitung (11) befindet.

## Claims

1. Smoke off-take pipe in a smoke-evacuation conduit (6), the said pipe comprising an extractor tube (8) having an angled end part terminating in an opening (10) intended to discharge into the conduit (6), and a part (14) for connection to an extractor circuit (37 ; 76), characterized in that it contains a closed casing (9) enclosing the end part of the extractor tube (10) and comprising a main part (13) having an axis and provided with an inlet (11) and an outlet (12) for a cooling fluid circuit formed in the casing, the said extractor tube discharging, via the opening (10), outside the casing and having its connection part (14) extending outside the main part (13) of the casing.

2. Pipe according to claim 1, characterized in that it comprises means (19 ; 22) for mounting the casing (9) on the smoke-evacuation conduit (6), and in that at least the connection part (14) of the extractor tube (8) is coaxial with the axis of the main part (13) of the casing (9).

3. Pipe according to claim 1 or claim 2, characterized in that the casing (9) comprises an internal tubule (17) surrounding the extractor tube (8) and forming, within the casing, a portion of the path of the cooling fluid circuit.

4. Pipe according to one of claims 1 to 3, characterized in that the opening (10) is substantially orthogonal to the axis of the main part of the casing (9).

5. Pipe according to one of claims 1 to 4, characterized in that the angled end part has a radius of curvature which is greater than three times the diameter of the extractor tube (8).

6. Pipe according to one of claims 1 to 5, characterizd in that the casing (9) comprises an end part which is shaped like the end part of the extractor tube (8).

7. Smoke off-take and analysis device in a smoke-evacuation conduit (11) defining a smoke path, containing at least one pipe (7) mounted on the conduit (11) with an opening (10) discharging into the smoke path, within the conduit, characterized in that the pipe is in conformity with any one of the preceding claims.

8. Device according to claim 7, characterized in that the pipe (7) is oriented within the conduit (11) in such a way that the opening (10) of the extractor tube (8) is so oriented that the smoke is extracted against the flow of its direction of circulation.

9. Device according to claim 7 or claim 8, characterized in that it comprises at least one suction means (56 ; 80) connected to the connection part of the extractor tube (8) and to an analysis system (59 ; 60 ; 63 ; 67 ; 78).

10. Device according to claim 9, characterized in that the analysis system contains a water-analyser (78).

11. Device according to claim 10, characterized in that the pipe (7) is connected to the water-analyser (78) by a circuit (76) comprising insulating and heating means.

12. Device according to one of claims 7 to 11, characterized in that it additionally comprises gas-injection means (80) discharging into the extractor tube (8) of the pipe (7).

13. Device according to one of claims 7 to 12, characterized in that it comprises at least one temperature probe (20) in the smoke path, which probe is coupled to the analysis system (59, 60, 63, 78, 67).

14. Installation for producing steel or ferro-alloys containing an arc furnace (1) provided with a smoke-evacuation conduit (5, 11), characterized in that it comprises a smoke off-take and analysis device according to one of claims 7 to 13.

15. Installation according to claim 14, comprising a device according to one of claims 9 to 11, characterized in that it comprises means (50, 51) for injecting oxygenated gas into the furnace (1) and adjustable oxygenated gas-feeding means (73, 74) coupled to the analysis system (67).

16. Installation according to claim 14 or claim 15, characterized in that the arc furnace (1) comprises a movable vault (3) provided with a length of smoke conduit (5) positioned, in the operating mode, opposite and at a slight distance from a smoke transfer conduit (11), the pipe (7) being disposed in the interstitial space between the opposed ends of the length of conduit (5) and of the conduit (11).
